Europäisches Patentamt

European Patent Office

Office européen des brevets

(19)

(11) Numéro de publication : **0 455 621 A1**

(12) # DEMANDE DE BREVET EUROPEEN

(21) Numéro de dépôt : **91870073.3**

(51) Int. Cl.⁵ : **B01J 20/16, B01J 20/00**

(22) Date de dépôt : **02.05.91**

(30) Priorité : **03.05.90 BE 9000473**

(43) Date de publication de la demande :
**06.11.91 Bulletin 91/45**

(84) Etats contractants désignés :
**CH DE DK ES FR GB IT LI NL**

(71) Demandeur : **RIJKSUNIVERSITEIT GENT
FAKULTEIT LANDBOUWWETENSCHAPPEN
LEERSTOEL VOOR BODEMFYSIKA
Coupure Links 653
B-9000 Gent (BE)**

(72) Inventeur : **De Boodt, Marcel Floret Louis Filip
Patijntjesstraat, 113
B-9000 Gent (BE)**

(74) Mandataire : **Vanderperre, Robert et al
Bureau Vander Haeghen S.A. Rue Colonel
Bourg 108 A
B-1040 Bruxelles (BE)**

(54) **Procédé pour favoriser la sorption d'un matériau schisteux contenant des alumino-silicates.**

(57)    On prépare un agent de sorption d'éfficacité accrue en soumettant un matériau schisteux contenant des alumino-silicates provenant de terrils charbonniers à un traitement thermique. On anéantit ainsi le gonflement ou le rétrecissement des alumino-silicates.

Le procédé de préparation comprend les opérations suivantes :

1) l'addition au matériau schisteux d'une quantité de ciment dans une proportion de 7 à 35% en poids et/ou de poudre d'aluminium pu d'une suspension de composés contenant de l'aluminium dans une proportion de 0,05 et 2% par rapport aux alumino-silicates,

2) la préparation d'un mélange-tampon stabilisant le pH à des valeurs comprises entre 10 et 14 par addition d'hydroxydes, par exemple $Ca(OH)_2$ et/ou $Mg(OH)_2$,

3) un traitement hydrothermique à 70-120°C, sous addition ou non de 0,2 à 2% de silicates de sodium du matériau devenue une suspension aqueuse.

EP 0 455 621 A1

La présente invention concerne un procédé pour augmenter le coefficient de sorption d'un matériau schisteux contenant des alumino-silicates provenant de terrils charbonniers, par un traitement thermique du matériau schisteux, afin d'anéantir le gonflement ou rétrecissement des alumino-silicates.

Elle trouve sa principale application dans l'épuration des eaux et l'assainissement des sols. Elle permet d'éliminer les dernières traces de métaux lourds, de colorants anorganiques et organiques et d'autres impuretés d'eaux résiduaires, de sols et de boues fortement polluées.

Le document EP-A-0337047 décrit une méthode selon laquelle on utilise des particules d'argile spécialement traitées qui sont proches des colloïdes du sol, mais qui jouissent d'une efficacité d'un ordre de grandeur une à deux fois plus élevé que celle des colloides pour adsorber les métaux lourds de l'eau résiduaire. On peut éliminer pratiquement complètement les éléments fixés à l'aide d'acide, grâce à quoi les alumino-silicates utilisés sont non-polluants et peuvent donc être déversés sur un terrain d'immondices ordinaire.

Selon le document EP-A-0337047 la capacité d'adsorption d'un matériau schisteux récupéré des terrils charbonniers, augmente lorsqu'on le soumet à une oxydation ultérieure, soit par traitement par voie humide, par exemple au moyen d'eau oxygénée ou de permanganate de potassium, soit par calcination dans un four.

Le matériau schisteux ainsi traité est formé d'alumino-silicates dits anamorphosés.

Les adsorbants de métaux lourds sur base des premiers alumino-silicates anamorphosés sont caractérisés par la présence de composants cristallins et amorphes disponibles sous forme de classes de granulats de diamètres variés : 50-200, 200-500, 500-1000 en 1000-2000 microns. Une granulométrie différente est nécessaire suivant l'épaisseur des lits de filtration et des buts spécifiques que l'on veut atteindre, comme l'adsorption d'une eau résiduaire ou la fixation de métaux lourds des sols et boues de dragage pollués.

Le document EP-A-0337047 donne une appréciation sur l'activité du filtre en fonction du degré de chargement de l'eau à traiter et de la vitesse de filtration. Le procédé permet une épuration pratique à l'aide de filtres rapides. Dans une colonne d'eau de 50 cm de haut on filtre environ 500 l/h m² d'eau brute. On peut atteindre une efficacité de 6500 à 800 volumes d'eau résiduaire contenant initialement par exemple 10 ppm de métaux lourds.

Ces premiers alumino-silicates anamorphés décrits ci-dessus, ont seulement une capacité d'adsorption d'une centaine de milli-equivalents par 100 g d'adsorbant. Pour pouvoir être utilisées efficacement dans la lutte contre la pollution, le pouvoir d'adsorption doit en gros atteindre 800 à 2000 volumes et ceci pour un temps de contact sensiblement convenanblement court, comme lors d'une filtration rapide.

La présente invention vise un procédé pour augmenter l'efficacité de la sorption d'un matériau schisteux contenant des alumino-silicates.

Elle concerne un procédé de type décrit dans le premier paragraphe du présent mémoire. Ce nouveau procédé se distingue du document EP-A-0337047 par le fait qu'il comprend les opérations suivantes :

1) l'addition au matériau schisteux d'une quantité de ciment dans une proportion de 7 à 35% en poids et/ou de poudre d'aluminium ou d'une suspension aqueuse de composés contenant de l'aluminium dans une proportion de 0,05 et 2% par rapport aux alumino-silicates,

2) la préparation d'un mélange tampon stabilisant le pH à des valeurs comprises entre 10 et 14 par addition d'hydroxydes, par exemple $Ca(OH)_2$ et/ou $Mg(OH)_2$,

3) un traitement hydrothermal à 70-120°C, sous addition éventuelle non de 0,2 à 2% de silicates de sodium du matériau devenu une suspension aqueuse.

Après réchauffage à 70-120°C pendant une demi-heure à plusieurs heures la structure micro-cristalline du matériau ajouté progresse. De ce fait, on vise une augmentation considérable de la surface spécifique ainsi que de la capacité d'adsorption.

Suivant un développement du procédé selon l'invention, on utilise comme composé contenant de l'aluminium, une poudre d'aluminium métallique dans une proportion de 0.01 à 0.10% en poids (100 à 1000 ppm) par rapport au matériau sec de la suspension.

Suivant une autre particularité du procédé selon l'invention, on prépare des granulats de 50 à 2000 microns par addition de 5 à 50 kg de ciment ou de ciment de haut-fourneau par 100 kg d'alumino-silicates anamorphosés calcinés, sous addition ou non de silicate de sodium (verre soluble). De préférence, on prépare une suspension aqueuse, contenant 25-50% en poids d'alumino-silicates anamorphosés, 35-50% d'eau, 7-35% de ciment, 0,05-50% d'hydroxyde de calcium - hydroxyde de magnésium - silicate de sodium auxquels on ajoute 0,2 à 2% de trichlorure d'aluminium en poudre d'aluminium métallique à pH au-dessus de 8, de préférence jusqu'à pH au-dessus de 8, de préférence jusqu'à pH = 10-12. Comme déjà mentionné plus haut, un ou plusieurs additifs (hydroxyde de calcium, aluminium, silicate de sodium) peuvent suivant les circonstances être maintenus.

D'autres particularités et détails du procédé selon l'invention apparaîtront au cours de la description suivante dans laquelle est fait référence aux dessins ci-joints.

Dans ces dessins :

– la figure 1 montre le diagramme de la diffraction des rayons-X d'alumino-silicates non traités comme lorsqu'ils proviennent des tubes ;

– la figure 2, le diagramme de diffraction de rayons X d'alumino-silicates calcinés ;

– la figure 3, le diagramme de diffraction des rayons X des granulats d'alumino-silicates traités selon l'invention ;

– La figure 4, une vue prise à l'aide d'un microscope électronique de granulats d'alumino-silicates traité selon l'invention ;

– la figure 5, les courbes de percement A, B, et C de la filtration d'une solution contenant :

A = 100 ppm Cu

B = 100 ppm Zn, et

C = 100 ppm Fe

sur des alumino-silicates anamorphosés selon l'invention,

– la figure 6 la courbe de percement de filtration d'une solution contenant 2750 ppb Hg sur les alumino-silicates anamorphosés ;

– la figure 7 la courbe de percement de filtration d'une solution contenant 8,5 ppm de manganèse sur les alumino-silicates susdits ;

– la figure 8 les courbes de titration A et B des alumino-silicates traités selon l'invention comparatives par rapport à la courbe de filtration du même matériau auquel on n'a toutefois pas donné une structure cristalline enchevétrée par un traitement hydro-thermique, c'est-à-dire un mélange d'alumino-silicates originels et de sels d'aluminium en plus du silicate de sodium ; et

– la figure 9 montre une courbe d'adsorption isotherme d'un anion $H_2PO_4^-$ sur un matériau schisteux selon l'invention et pour chacun des composants qui le constitue,

la courbe d'alumino-silicates et la courbe de sels d'alumium.

Pour purifier efficacement de l'eau polluée, chargée de métaux lourds et de métaux de transition de manière à ce qu'elles satisfassent une ou deux étapes selon la teneur initiale des polluants.

La première étape est assez générale et est basée sur la précipitation chimique de métaux lourds. Des métaux lourds peuvent être retirés des eaux polluées par le fait de les transformer en composés non pollués, qui peuvent être éliminés facilement par sédimentation, filtration ou centrifugation. Le liquide surnageant ou celui qui est éliminé contient cependant des concentrations de métaux non ferreux trop élevée que pour pouvoir déverser les solutions qui les contiennent. C'est pourquoi un second traitement basé selon l'invention sur une étape d'adsorption s'avère nécessaire.

Cette étape est très importante parce qu'elle permet d'éliminer les dernières traces de polluants jusqu'à moins de 1000 ppb pour satisfaire aux normes de déversement, comme indiqué dans le tableau 1.

## TABLEAU 1

Utilisation d'alumino-silicates anamorphosés pour purifier l'eau résiduaire

| Element (ppb) | Exemple concentration initiale dans l'eau résiduaire | Résultat de l'analyse après filtration | Nombre minimum de volumes desdits traités |
|---|---|---|---|
| As | 800 | 30 | 1000 |
| Ba | 12.000 | 30 | 800-1600 |
| Cd | 80.000 | 5 | 1600 |
|  | 70(*) | 3 | 1200 |
| Co | 90.000 | 20 | 1400 |
|  | 40(*) | 8 | 1200 |
| Cr | 12.000 | 50 | 1000 |
| Cu | 14.000 | 500 | 1500 |
|  | 27(*) | 3 | 1000 |
| Ga | 1.000 | 20 | 800 |
| Au | expérience en cours | | |
| Fe | 11.000 | 50 | 1500-2000 |
| Pb | 410.000 | 30 | 800-1000 |
|  | 180(*) | 40 | 1350 |
| Mn | 8.500 | 100 | 2600 |
|  | 36(*) | 3 | 2500 |
| Hg | 8.000 | 3 | 1000 |
| Ni | 16.900 | 100 | 800-1000 |
|  | 732(*) | 10 | 1000 |
| Se | 900 | 50 | |
| Ag | expérience en cours | | |
| Te | 1.300 | 200 | 600 |
| Zn | 50.000 | 1000 | 800-12000 |

*traitement de purification d'eau potable.

La première étape de traitement est appliquée ci-après. La méthode la plus utilisée pour obtenir un précipité de métaux lourds consiste à augmenter le pH d'une solution à l'aide d'hydroxyde de sodium ou d'un sulfure ou par carbonatation.

Ces solutions de pratiquement tous les métaux lourds sous forme d'hydroxyde présentant une nette diminution de leur solubilité lorsque le pH croît.

Les métaux lourds se trouvent dans l'eau sous forme de cations hydratés. De tels cations se comportent dans l'eau comme un acide. L'effet thermique d'une augmentation de pH sur les polluants métalliques les plus importants est la transformation de cations hydratés suivant une réaction acide base en leur hydroxyde.

La constante d'équilibre qui décrit cette réaction est la constante de dissociation Ka dont le logarithme négatif est la valeur pKa :

$$pKa = Log\ Ka$$

Plus de valeurs pKa sont faibles plus vite les éléments lourds vont précipiter. En augmentant le pH on peut ramener la teneur des métaux lourds dans l'eau à quelques ppm ou quelques dizaines de ppm. Ces teneurs sont toutefois encore trop élevées pour satisfaire aux normes de déversement dans les eaux de surface.

La pratique enseigne que dans les eaux usées, dont le pH est augmenté, on n'atteint pas les faibles concentrations qui sont thermiquement possibles. Ces impuretés l'empêchent. Ainsi l'on constate là où la théorie ne prévoit que des fractions de ppm, des concentrations de 10 à 100 ppm de métaux lourds dans le liquide surnageant les eaux usées. Par conséquent les dernières traces de métaux lourds doivent être éliminées selon un ou plusieurs autres procédés.

La deuxième étape pour obtenir suivant l'invention, l'élimination des ions non-ferreux, de solutions aqueuses est discutée ci-dessous.

Une des techniques les plus intéressantes qui entre en ligne de compte est la sorption des métaux lourds sur des alumino-silicates anamorphosés. Par sorption on entend aussi bien l'absorption, l'adsorption, la nucléation que la précipitation. Aussi on peut abaisser le niveau des métaux lourds jusqu'à moins de 1 ppm.

Ces alumino-silicates anamorphosés sont préparés à partir de schistes de l'époque Paléozoïque (sédiment westfalien). Par leur séjour prolongé dans le sous-sol à ± 800 m de profondeur) et leur déversement sur les terrils ils sub issent une importante détente de pression, qui favorise une croissance supplémentaire des espaces interlaminaires dans la structure argileuse. Par l'exposition en plein air ils ont été soumis souvent pendant plus de 50-100 ans aux intempéries, qui ont provoqué l'augmentation de la quantité relative d'aluminium par rapport à la teneur en silicium dans les schistes, par exemple le rapport Al/Si = 93 dans des schistes non exposés aux intempéries, contre Al/Si = 0,4 dans les alumino-silicates provenant des terrils et soumis aux intempéries.

Pour pulvériser les schistes, on les chauffe dans un four à ± 800°C. Ces particules obtenues sont séparées ensuite de la matière par un cyclone de manière à obtenir des particules avec une granulométrie moyenne de 50-200 microns. Ces schistes sont partiellement brisés par la chaleur et une recristallisation se produit cà et là. La température n'est pas uniforme et peut varier de beaucoup à certains endroits.

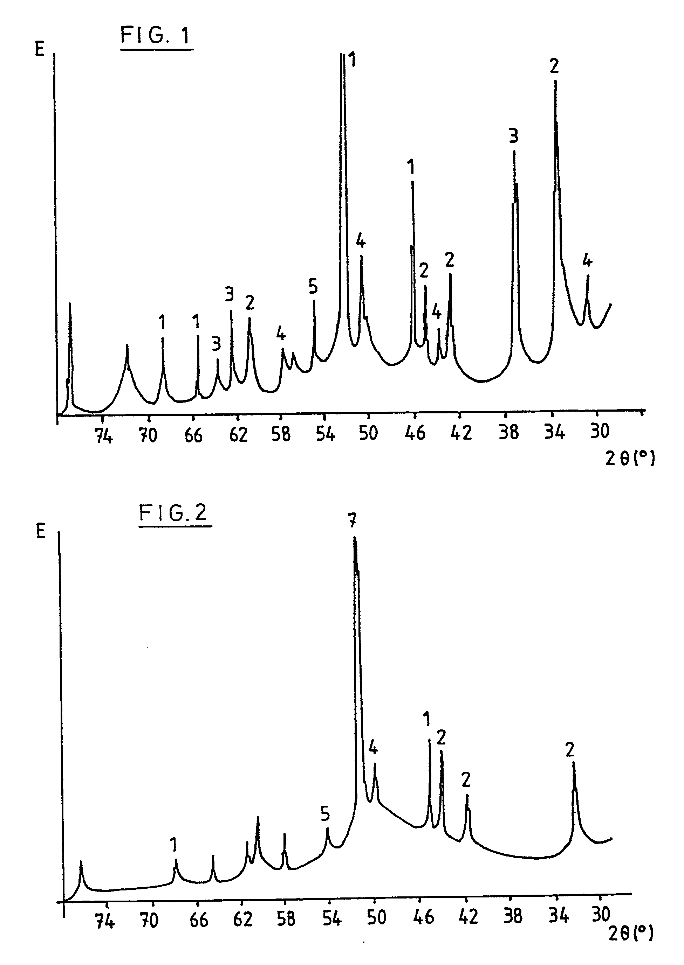

Les figures 1 et 2 illustrent les diagrammes de diffraction des rayons X de matériaux schisteux Westphaliens avent et après calcination dans le but de scinder les groupes hydroxyles et de réduire fortement de sorte que plus aucun gonflement des matériaux ne puisse avoir lieu, mais dans lesquels la structure cristalline reste inchangée.

La figure 1 montre que, sont présents dans le matériau schisteux provenant des terrils charbonniers, avant calcination, les composés suivants :

| | |
|---|---|
| quartz | 1 |
| phyllo-silicates : illite | 2 |
| caolinite | 3 |
| chlorite | 4 |
| calcite-CaCo$_3$ | 5 |
| dolomite - CaMg(Co$_3$)$_2$ | non déterminé |
| anhydrite - CaSO$_4$ | non déterminé |
| siderite - FeCO$_3$ et | non déterminé |
| pyrite - FeS | non déterminé. |

Le caolinite, le chlorite et la pyrite ont disparu au cours de la calcination. L'échauffement de la pyrite résulte de la formation de magnétite et hématite. Le diagramme montré dans la figure 2 montre que les minéraux argileux calcinés ne donnent pas de nouveaux minéraux cristallins. Ils fournissent plutôt des minéraux amorphes, entre autres l'éttringite 6 (6 CaOAl$_2$O$_3$3SO$_4$ 31 H$_2$O).

On a trouvé des microcristaux appartenant au groupe de la spirule (Mg, Fe) $Al_2O_4$. Au contact avec de l'eau contenant du $CO_2$, ils donnent des minéraux du type pyraurite $(M^{2+})_6 (M^{3+})_2 (OH)_{16} \cdot CO_3. H_2O$, comme par exemple l'hydrotalcite $(Mg_6Al_2 (OH)_{16} CO_3 \cdot H_2O)$. On a également décelé du jarosite $(KFe_3 CO_4)_2 (OH)_6$.

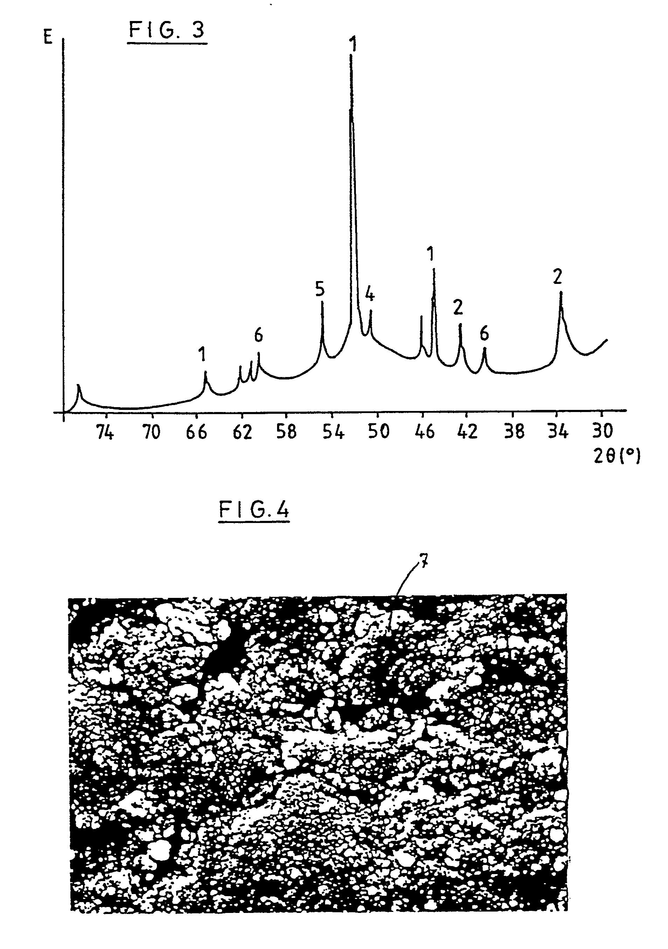

Après calcination, les structures cristallines de l'illite et de la muscovite, restent decelables comme illustré dans la figure 3, toutefois le chlorite a disparu du diagramme de diffraction, tandis que l'anhydrite, la magnétite et l'hématite ont été retouvées.

Dans les granulats on retrouve aussi de l'éttringite 6, les sels d'aluminium et les silicates de sodium qui ont été ajoutés ne sont pas décélables par rayons-X, parce qu'ils sont micro-cristallins ou amorphes. Pourtant la teneur en groupes hydroxyles, qui parviennent comme micro-cristaux précipités sur les alumino-silicates, est élevée (voir les formules du groupe de pyraurites). La quantité de cations et anions adsorbés est plus élevée que la somme de la sorption sur les alumino-silicates et les aluminates séparément, comme montré dans le tableau 2.

## TABLEAU 2

Exemples d'alumino-silicates suivant l'invention présentant une capacité de sorption remarquable et dénommés "Béringiet" ainsi que la capacité de sorption des composants qui les constituent :

a.  les produits contenant de l'aluminium avec comme additifs $Ca(OH)_2$ - $Mg(OH)_2$ - stéarates de sodium, et

b.  de matériaux schisteux avant traitement.

| Constituants séparés | Béringite |
|---|---|
| Cd: a) 280 ppm + b) 2240 ppm | Cd: 30.000 ppm |
| Cr: a) 130 ppm + b) 1850 ppm | Cr: 12.850 ppm |
| Zn: a) 85 ppm + b) 1450 ppm | Zn: 13.700 ppm |
| Mn: a) 98 ppm + b) 3560 ppm | Mn: 42.500 ppm |
| P: a) 630 ppm + b) 480 ppm | P : 10.200 ppm |

La répartition granulométrique est en moyenne la suivante :
37% inférieure à 100 μm
3% est comprise entre 100 et 150 ³m,
28% est comprise entre 250 et 500 ³m,
4% supérieure à 500 μm.

Le microscope électronique montre une structure lamellaire de la plus grande partie des particules calci-

EP 0 455 621 A1

nées, sur lesquelles on reconnaît des microcristaux d'aluminium précipités sous forme de sphérules 7 plus ou moins semi-sphériques. Ces métaux lourds sont de préférence adsorbés sur ces particules (voir figure 4). En outre, on remarque de grandes cavités (poreuses) entre les particules.

Les particules schisteuses sont formées par déshydratation de minéraux argileux qui augmente la distance interlamellaire lorsque la calcination a lieu à la température exacte (± 400 - $^+$ - 600°C). Ce matériau poreux montre qu'aux environs et au-dessus de cette température critique, au moins une partie du matériau originel commence à fondre.

Un exemple de composition de l'adsorbant est reproduit dans son entièreté dans le tableau 3 suivant :

## TABLEAU 3

### Composition de granulats d'alumino-silicates

densité                  : 0,85

humidité à 105°C    : $^+_-$ 8%

analyse des matières sèches :

| Element | Pourcentage | Element | Concentration |
|---------|-------------|---------|---------------|
| $SiO_2$ | 52 | Mn | $1100$ mg $kg^{-1}$ |
| $Al_2O_3$ | 30 | Cu | $120$ mg $kg^{-1}$ |
| CaO | 3,45 | Zn | $630$ mg $kg^{-1}$ |
| MgO | 1,48 | Cd | $9.1$ mg $kg^{-1}$ |
| $K_2O$ | 2,65 | Co | $98$ mg $kg^{-1}$ |
| $Na_2O$ | 0,58 | Ni | $123$ mg $kg^{-1}$ |
| $Fe_2O_3$ | 4,72 | Pb | $203$ mg $kg^{-1}$ |
| | | Cr | $950$ mg $kg^{-1}$ |

L'adsorbant présente la même composition que le schiste originel, si ce n'est que les sels de $SiO_2$ et $Al_2O_3$ ajoutés couvrent ± 82% de la surface totale, comme le montre une analyse d'EDAX dans le tableau 4.

De l'examen d'un diagramme EDAX (energy dispersive X-ray analysis), on peut déduire la composition de la surface qui est rendue visible par un scannaire électronique (SEM).

Un scannaire électronique saisit un micron carré et pénètre sur une profondeur d'un micron. Dans le tableau 4 on peut voir la composition locale d'un alumino-silicate selon l'invention avant d'y percoler une eau contenant du manganèse

Dans le tableau 4 (à droite) on peut voir la composition locale de la surface lorsque l'alumino-silicate est saturé. La concentration atteint localement jusqu'à 42,34% de manganèse.

7

## TABLEAU 4

Analyse EDAX de la surface de Béringite ®. A gauche la composition avant percolation d'une eau chargée de manganèse et à droit après saturation de l'adsorbant par du manganèse.

| Eléments analysés | Pourcentage en poids avant percolation | Pourcentage en poids après percolation |
|---|---|---|
| magnésium | – | 10,56 |
| aluminium | 20,63 | 6,70 |
| silicum | 57,15 | 0,98 |
| soufre | 6,05 | 4,28 |
| potassium | 7,53 | 0,53 |
| calcium | 5,74 | 28,46 |
| manganèse | – | 47,34 |
| titane | 0,95 | – |
| fer | 1,95 | 1,15 |
| Total : | 100,00 | 100,00 |

A l'examen du comportement des oligoéléments dans le sol et dans les eaux intersticielles, il en suit quelques constatations intéressantes dont on peut faire usage pour sorber les polluants de façon efficace.

1. Lorsqu'une carence en éléments mineurs se présente chez les plantes, par exemple suite à un pH trop élevé, on constate que la teneur en oligo-éléments dans l'eau du sol est souvent mille fois plus petite que la quantité d'éléments sorbés aux particules colloïdales du sol. En comparaison avec une solution aqueuse ordinaire à pH élevé où aucune particule d'argile n'est présente, on constate que la concentration en éléments lourds est beaucoup plus élevée dans la solution surnageante en équilibre avec le précipité que dans le cas où des alumino-silicates sont présents dans la solution et sur lesquels les métaux lourds sont sorbés ;

2. Pour une quantité équivalente en poids de particules d'argile, la sorption d'éléments lourds est plus importante à mesure que les mêmes particules sont plus petites. Cela montre que la sorption est liée non seulement à la surface des particules, mais aussi aux bonnes possibilités de passage des éléments lourds jusqu'à l'emplacement de la sorption, ce qu'on appelle l'endroit actif de sorption. En plus, le gonflement des argiles empêche la pénétration rapide des ions jusqu'à l'intérieur de la particule. On obtient souvent un effet positif sur la sorption en éliminant le gonflement ;

3. La sorption d'oligo-éléments sur des particules d'un liquide à faible concentration, soit quelques dixièmes de ppm, se fait rapidement (quasi instantanément jusqu'à quelques minutes). La sorption se fait cependant lentement lorsqu'il s'agit d'un liquide à haute concentration, soit de 10000 ppm ou plus. Néanmoins, on constate dans tous les cas que, plus longtemps le contact se fait entre le liquide et le sorbant, plus la sor-

EP 0 455 621 A1

ption est importante sans toutefois dépasser une valeur maximale. Ainsi, il y a des cas où la sorption est augmentée d'un facteur 2 ou plus, en cas d'humidification rapide, par exemple par drainage ou filtration.

4. La sorption de métaux lourds a aussi un composant stérique, c'est-à-dire un composant spatial. Ceci veut dire qu'il doit y avoir une place suffisante sur les colloïdes terreux pour pouvoir sorber une grande quantité d'éléments lourds. D'après les courbes d'adsorption iso-thermiques (voir figure 2) il semble qu'il n'y ait pas de maximum réel lorsque les éléments lourds sont sorbés sur les alumino-silicates. La courbe d'adsorption reste en hausse. Le maximum réel que l'on appelle la capacité de l'adsorbant est influencé également par l'espace disponible (la grandeur des pores) pour accumuler les ions lourds.

Pour les besoins de la croissance des plantes, on s'efforce à disposer une réserve d'oligo-éléments en les sorbant aux colloïdes terreux. On doit avant tout tenir compte du pH si l'on veut que ces éléments soient assimilables par les racines des plantes sous forme ionique. Pour un pH élevé, la quantité d'ions retenue par les colloïdes du sol et celle qu'on retrouve dans l'eau intersticielle sont réparties grosso-modo en proportion de 1000 à 1. La plante arrive dans le courant d'une saison de croissance entière à rassembler dans ces tissus adultes une quantité de métaux lourds dont la concentration est 100 fois plus élevée que dans l'eau intersticielle du sol. Ainsi lorsqu'on a trouvé 100 ppm de zinc dans la plante, on constate que dans l'eau interficielle du sol on ne retrouve qu'en moyenne seulement 1 ppm, tandis que la quantité associée aux particules de terre atteint 1000 PPm.

Pour la préparation d'adsorbants sur base d'alumino-silicates les observations suivantes sont de grande importance :

a. La sorption des éléments lourds est fortement favorisée lorsqu'on recouvre les particules argileuses d'une courbe d'hydroxydes et/ou d'autres composants minéraux. Cela se passe pendant l'échappement du matériau schisteux, par l'ajout d'aluminates aux alumino-silicates . La quantité de ce coating poreux déterminera dans une grande mesure la capacité d'adsorption. Les particules d'alumino-silicates, possédant une surface spécifique d'au moins 20 $m^2/g$, mesurée par adsorption d'azote sont obtenues lors d'un échauffement rapide et limité dans un four piloté électroniquement et à haute capacité de production (Kempische Steenkolenmijnen - Belgique). Le pouvoir initial de contraction et de gonflement des alumino-silicates est bloqué grâce à un traitement thermique à 500°C. Ces groupes hydroxyles des particules argileuses sont éliminées sans qu'une fusion ou vitrification des particules ne se produise. La composition hétérogène du coating poreux favorise fortement la fixation des éléments lourds par chemisorption. Ces cations fixés en premier lieu servent "de germes" pour retenir ensuite d'autres cations enlevés à la solution. On constate lors de cette nucléation que la précipitation de métaux lourds autour du "germe" ainsi formé, est grandement favorisée par la structure du cristal du support, par exemple par des alumino-silicates et lorsque les métaux lourds ont une dimension ionaire qui convient dans la structure cristalline même de l'adsorbant.

En outre, jusqu'à une certaine limite de la sorption sélective des métaux lourds sous forme d'oxy-hydroxydes est augmentée lorsque le pH augmente. Cette croissance des cristaux sur les alumino-silicates susdits s'appelle épitaxie.

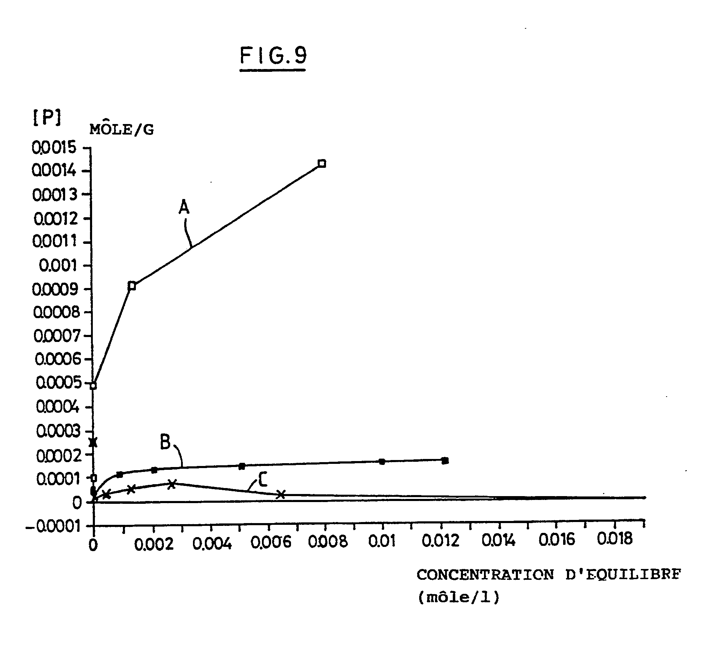

Dans la figure 8, les courbes de titration A et B des alumino-silicates traités, sont pratiquement horizontales, ce qui indique un pouvoir-tampon, alors que la courbe C qui descend rapidement reproduit la courbe de titration des alumino-silicates non-traités par les sels d'aluminium et le silicate de sodium, toutefois sous traitement hydrothermique.

b. La capacité d'adsorption peut encore être augmentée, comme connu de la science des sols, par l'ajout de quantités catalytiques de substances qui influencent le potentiel redox et/ou la nucléation. Cela conduit à une précipitation et une cristallisation plus poussées sur les alumino-silicates. L'adsorption sélective de métaux lourds en tant qu'oxyhydroxydes augmente à pH croissant. De même, l'adresse du manganèse et du zinc augmente sous l'action de bisphosphate d'ammonium $NH_4H_2PO_4$. Dans d'autres cas, c'est l'addition de perchlorate de sodium, de chlorure de potassium ou de chlorure de sodium qui sont les plus indiqués pour augmenter l'efficacité de la sorption.

En partant d'une suspension colloïdale d'alumino-silicates anamorphosés comme décrit dans le document EP-A-0337047, condensé dans une pulpe ayant un rapport de condensation de 1 à 10 entre la suspension colloïdale et la pulpe, ensuite concentré de préférence par décantation et filtration au travers d'un filtre-presse afin d'obtenir un gâteau de filtration relativement sec, avec un rapport de concentration de 1 à 200, on réalise les opérations suivantes :

1) l'addition à un matériau schisteux provenant des terrils-charbonniers d'une quantité de poudre d'aluminium ou une suspension aqueuse d'un composé contenant de l'aluminium, à raison de 0,05 à 2% en poids par rapport aux alumino-silicates,

2) le tamponnage du pH jusqu'à des valeurs comprises entre 10-14 par addition d'hydroxydes, par exemple $Ca(OH)_2$ et/ou $Mg(OH)_2$,

3) un traitement hydrothermal à 70 - 120°C, sous addition éventuelle de 0,2 à 2% de silicate de sodium, du matériau transformé en suspension aqueuse.

Dans un premier mode de préparation on choisit comme composé contenant de l'aluminium, de la poudre d'aluminium métallique. Suivant les circonstances et le problème posé on obtient de meilleurs résultats avec des sels d'aluminium, de préférence du trichloride d'aluminium en du disulfate d'aluminium. Parfois l'ajout de produits contenant de l'aluminium n'est pas nécessaire, si les alumino-silicates calcinés contiennent déjà suffisamment d'aluminium, par exemple si le rapport aluminium/silicium atteint environ 0,4.

Dans les exemples, l'adsorption d'un polluant (adsorbant) sur des alumino-silicates selon l'invention (adsorbant) est déterminée par un jeu de courbes de percement.

Une courbe de percement décrit à chaque instant le lieu existant entre la quantité de polluant qui s'écoule à travers l'adsorbant et la concentration en éléments lourds de l'effluent à cet instant.

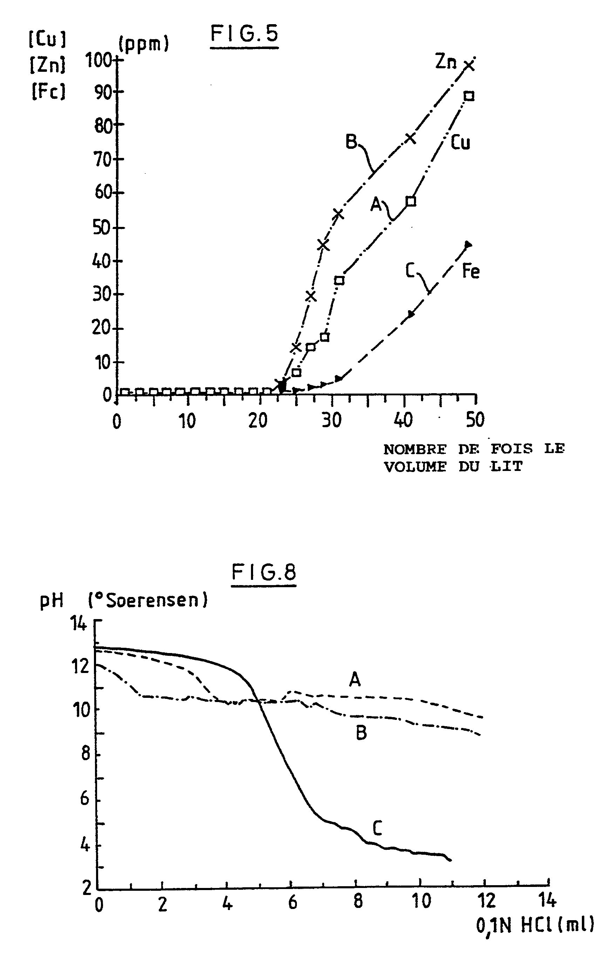

La courbe de percement est déterminée de la manière suivante : une solution contenant une concentration comme de polluant s'écoule à débit constant au travers d'une quantité déterminée d'adsorbant, disposée dans une colonne. L'effluent est recueilli en diverses fractions. Pour chaque fraction on détermine la concentration du polluant. Ces résultats sont représentés dans un diagramme dans lequel on porte en abscisses la quantité d'effluent qui s'écoule au travers du lit filtrant et en ordonnées la concentration correspondant dans l'effluent (voir figures 5 à 7).

Le volume d'adsorbant qui fait office de matériau est appelé lit filtrant. Ce volume d'eau que l'on peut purifier, c'est-à-dire le volume d'eau polluée qui peut être traité au travers du filtre sans que celui-ci ne perce, c'est-à-dire sans que des métaux lourds n'apparaissent dans l'effluent, est comparé au volume du lit filtrant.

Pour des applications industrielles, où d'importants débits d'eau doivent être purifiées, les courbes de percement donnent une image réaliste des possibilités d'adsorption du matériau. Les courbes de percement sont d'abord testés en laboratoire sur de petits volumes de lit filtrant, avant d'aboutir aux réalisations concrètes par le biais des installations pilotes. A cet effet, on utilise des bacs de filtration de ± 3m x 5m x 1,5m.

Dans les exemples ci-dessous, on donne une série de courbes de percement. En laboratoire le débit de l'influent comporte 10 ml/min ou environ 20 cm/h. L'influent traverse un élément de tube de percolation d'un diamètre de 3,1 cm, dans lequel 20 g d'alumino-silicates sont déposés. Le courant s'effectue de bas en haut, afin d'éviter une perte de charge importante. Le tube de percolation est pourvu à sa partie inférieure d'un filtre de verre fritté qui assure une répartition homogène de l'influent sur toute la section. L'effluent est recueilli par fraction de 20 ml à l'aide d'un collecteur de fractionnement, après quoi la concentration du métal dans chaque fraction est déterminée, par exemple par spectrophotométrie d'adsorption.

La figure 5 montre que l'alumino-silicate anamorphosé permettait d'atteindre, dès les premiers essais, 20 volumes de lit filtrant, même si l'eau résiduaire et fortement polluée (Fe-Cu-Zn, au total 300 ppm).

Par l'apport d'une couche poreuse obtenue par l'addition de 0,05 à 2% en poids de trichlorure d'aluminium à une suspension aqueuse de l'alumino-silicate anamorphosé, on favorise nettement l'adsorption. On a pu atteindre de nombreuses centaines de lits filtrants avec une triple solution présentant une charge totale de 300 ppm.

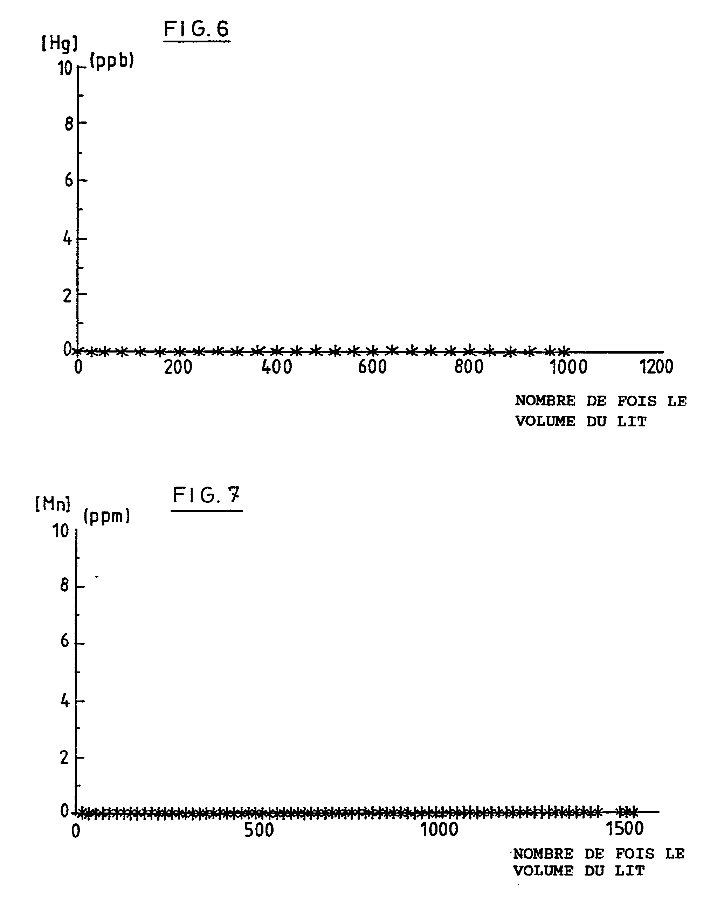

Les exemples ci-joints illustrent le fait, que des applications industrielles permettent la purification de 1500 à 2000 volumes de lit filtrant, sans que l'effluent ne dépasse les normes permises pour le sauvegarder $Mn^{++}$. Une série d'autres exemples contenant du mercure, du zinc, du cuivre et du fer sont également reproduits. Cela signifie que de cette manière 2 à 4% d'éléments lourds peuvent être liés à l'adsorbant. Excepté les résultats déjà cités, on se réfère à la figure 6, dans laquelle la courbe de percement d'un alumino-silicate anamorphosé est représentée pour une eau résiduaire chargée de 22 ppm de mercure. De cette figure on déduit clairement, que les eaux résiduaires faiblement polluées en mercure peuvent malgré tout être purifiées jusqu'à atteindre la norme de déversement limitée à 50 ppb. Dans l'effluent, la concentration moyenne est inférieure à 50 ppb. Ainsi on peut satisfaire les normes les plus sévères. On a pu même atteindre 25 ppb avec un autre échantillon d'adsorbant semblable.

Une situation analogue est illustrée dans la figure 7, au cours de laquelle on retrouve seulement 0,3 ppm de manganèse dans l'effluent après percolation d'un volume résiduaire chargé de 4,35 ppm de manganèse, égal à 700 volumes de lits filtrants.

Dans la figure 7, on donne un exemple de purification par élimination du Mn, au cours de laquelle nucléation et précipitation coopèrent grâce à l'ajout de traces de sel, ce qui permet d'atteindre 1500 volumes de lit filtrant.

Le débit moyen d'eau résiduaire 10 ml/min, la fixation du polluant sur l'adsorbant s'effectue de plusieurs manières : adsorption, absorption, nucléation et précipitation. Elle peut être résumée en un seul mot : sorption. Par filtration on atteint généralement 1000 à 2000 volumes de lit filtrant pour un même garnissage de filtre.

La figure 9 est un exemple particulièrement clair de synergisme d'adsorption isotherme d'un anion $H_2PO_4$- portant de l'acide phosphorique. La courbe supérieure A est la courbe d'adsorption sur le matériau selon l'invention et est environ 10-100 fois plus élevée que l'ajout de sels d'aluminium et silicate de sodium, en même temps que l'alumino silicate originel.

Les deux courbes inférieures B, C montre la faible sorption des composants dont est constitué l'alumino-silicate anamorphosé. La courbe B montre la capacité de sorption de la matière schisteuse initiale. La courbe C est le précipité total des matières polluantes dissoutes qui n'ont pas été retenues sur les alumino-silicates.

On consate que la Béringite a un pouvoir d'adsorption plus ou moins quatorze fois plus élevée que celui de la somme des composants qui la constituent.

Ces résultats sont considérés comme étant très performants. Il faut souligner que l'élimination des dernières traces de métaux lourds et métaux de transition peut être effectuée d'une manière économiquement rentable.

Un échantillon d'alumino-silicate légèrement modifié a été testé. Le composé principal de cette matière est une argile riche en illite tertiaire partiellement altérée qui après ne doit pas être séchée à l'air ni ensuite moulue. Cette matière n'a pas été soumise à une calcination au four à 180°C comme la Béringite classique connue sous le nom de Béringite -C ®. La formation de granulats d'alumino-silicates modifiés désignés par Béringite K® est très différente de celle de la Béringite C ®.

Composition de la Béringite K® :

5/10 d'argile riche en illite ;

3/10 gel de bentonite : 30 g de bentonite en suspension dans 1 litre d'eau pendant 24 heures - déverser le liquide surnageant jusqu'à 300 ml ;

1/10 de ciment de Portland ; HK 40 ciment.

1/10 eau

0,4% cellulose.

Après agitation, on laisse le mélange se stabiliser pendant 4 heures et on sèche pendant 24 heures à 85°C (activité hydrothermale).

Béringite -C ® et Béringite -K ® différent entre eux par leur affinité pour la sorption sélective de certains métaux.

Béringite -C ® : Zn et Mu     20%

Béringite -K ® : Cd et Ni     18%

Elles ne présentent aucune affinité particulière pour le cuivre, le fer, le nickel, le cobalt, le cuivre, le plomb et le mercure et adsorbent de manière semblable les métaux.

## Revendications

1. Procédé pour augmenter le coefficient de sorption d'un matériau schisteux provenant de terrils charbonniers et contenant des alumino-silicates, en soumettant ledit matériau schisteux à un traitement thermique, pour anéantir le gonflement ou le rétrécissement des alumino-silicates, caractérisé en ce que :

    1) l'addition au matériau schisteux d'une quantité de ciment dans une proportion de 7 à 35% en poids et/ou de poudre d'aluminium ou d'une suspension de composés contenant de l'aluminium dans une proportion de 0,05 et 2% par rapport aux alumino-silicates,

    2) la préparation d'un mélange-tampon stabilisant le pH à des valeurs comprises entre 10 et 14 par addition d'hydroxydes, par exemple $Ca(OH)_2$ et/ou $Mg(OH)_2$,

    3) un traitement hydrothermique à 70-120°C, sous addition ou non de 0,2 à 2% de silicates de sodium du matériau devenue une suspension aqueuse.

2. Procédé selon la revendication 1, caractérisé en ce qu'on utilise comme composé contenant de l'aluminium, une poudre d'aluminium métallique dans une proportion de 0.01 à 0.10% en poids (100 à 1000ppm) par rapport au matériau sec dans la suspension.

3. Procédé selon la revendication 1 ou 2, caractérisé en ce qu'on utilise comme composé contenant de l'aluminium des sels d'aluminium, de préférence du trichlorure d'aluminium ou du disulfate d'aluminium.

4. Procédé selon une quelconque des revendications précédentes, caractérisé en ce qu'on ajoute aux alumino-silicates traités, de l'hydroxyde de calcium, de l'hydroxyde de magnésium et/ou du silicate de sodium, pendant ou après le traitement hydrothermique.

5. Procédé selon une quelconque des revendications précédentes, caractérisé en ce qu'on utilise comme matière schisteuse des alumino-silicates anamorphosés calcinés ou grillés.

6. Procédé selon l'une des revendications 1 à 3, caractérisé en ce qu'on laisse monter la température pendant une seule ou plusieurs phases de calcination. jusqu'à 400 ou 600°C sous addition d'hydroxyde de calcium, d'hydroxyde de magnésium et/ou silicate de sodium.

7. Procédé selon l'une quelconque des revendications précédentes, caractérisé en ce qu'on prépare des granulats de 50 à 2000 microns par addition de 5 à 50 kg de ciment ou de ciment de haut-fourneau par 100 kg d'alumino-silicates anamorphosés calcinés, sous addition ou non de silicate de sodium (verre soluble).

8. Procédé selon l'une quelconque des revendications précédentes, caractérisé en ce qu'on prépare une suspension aqueuse, contenant 25-50% en poids d'alumino-silicates anamorphosés, 35-50% d'eau, 7-35% de ciment, 0,05-50% d'hydroxyde de calcium-hydroxyde de magnésium- silicate de sodium auxquels on ajoute 0.2 à 2% de trichlorure d'aluminium ou poudre d'aluminium métallique à pH au-dessus de 8, de préférence jusqu'à pH = 10-12.

9. Matériau clivalle susceptible d'être obtenu selon le procédé de la revendication 8, contenant 500 g d'alumino-silicates, 375 g d'eau, 125 g de ciment de haut-fourneau HK-40, 200 g de poudre d'aluminium métallique, 2 g de silicate de sodium et 5 g d'hydroxyde de calcium.

FIG. 1

FIG.2

FIG. 3

FIG.4

FIG.5

[Cu]
[Zn]
[Fc]

(ppm)

Zn

B

Cu

A

C

Fe

NOMBRE DE FOIS LE
VOLUME DU LIT

FIG.8

pH  (°Soerensen)

A

B

C

0,1N HCl (ml)

## FIG. 6

[Hg] (ppb)

NOMBRE DE FOIS LE
VOLUME DU LIT

## FIG. 7

[Mn] (ppm)

NOMBRE DE FOIS LE
VOLUME DU LIT

## FIG.9

[P] MÔLE/G

0.0015
0.0014
0.0013
0.0012
0.0011
0.001
0.0009
0.0008
0.0007
0.0006
0.0005
0.0004
0.0003
0.0002
0.0001
0
-0.0001

A

B

C

0    0.002   0.004   0.006   0.008   0.01   0.012   0.014   0.016   0.018

CONCENTRATION D'EQUILIBRE
(môle/l)

Office européen
des brevets

**RAPPORT DE RECHERCHE EUROPEENNE**

Numero de la demande

EP 91 87 0073

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 337 047 (RIJKSUNIVERSITEIT GENT) <br> * Pages 10-11, revendications * <br> --- | 1,3,5 | B 01 J 20/16 <br> B 01 J 20/00 |
| A | US-A-1 884 954 (ZOUL) <br> * Page 2, lignes 110-125 * <br> --- | 1,3 | |
| A | US-A-4 857 203 (POPE) <br> --- | | |
| A | US-A-4 440 867 (SABERWAL) <br> --- | | |
| A | FR-A-2 615 755 (RHEIN.-WESTF. KALKWERKE) <br> * Pages 11-14 * <br> ----- | 1,2,4 | |

| | | | DOMAINES TECHNIQUES RECHERCHES (Int. Cl.5) |
|---|---|---|---|
| | | | B 01 J |

Le présent rapport a été établi pour toutes les revendications

| Lieu de la recherche | Date d'achèvement de la recherche | Examinateur |
|---|---|---|
| LA HAYE | 09-07-1991 | WENDLING J.P. |